# EUROPÄISCHE PATENTSCHRIFT

(11) **EP 1 365 886 B1**
(45) Veröffentlichungstag und Bekanntmachung des Hinweises auf die Patenterteilung: **09.05.2007**
(21) Anmeldenummer: 02708330.2
(22) Anmeldetag: 25.02.2002
(51) Int. Cl.: B23Q 1/03, B23Q 16/00, B25B 11/00, B21D 43/00, B23Q 3/18

(54) **WERKSTÜCKSPANNTISCH**
CLAMPING TABLE FOR WORKPIECES
TABLE DE SERRAGE DE PIECE

(30) Priorität: 26.02.2001 DE 10109212
(43) Veröffentlichungstag der Anmeldung: 03.12.2003
(73) Patentinhaber: Reichenbacher Hamuel GmbH, 96487 Dörfles-Esbach (DE)
(72) Erfinder: CZWIELONG, Thomas, 96450 Coburg (DE)
(74) Vertreter: Paustian, Othmar
(86) Internationale Anmeldenummer: PCT/EP2002/001967
(87) Internationale Veröffentlichungsnummer: WO 2002/068150

(56) Entgegenhaltungen:
- EP-A- 0 830 922
- DE-A- 19 523 198
- DE-U- 9 315 813
- US-A- 4 604 934
- US-A- 5 198 039

## Beschreibung

Die Erfindung bezieht sich auf einen Werkstückspanntisch mit wenigstens zwei Schlitten, die als Spannelemente ausgebildet sind oder zu deren Halterung dienen und die in Reihe auf einer Führungsbahn angeordnet sowie längs dieser verfahrbar sind und jeweils eine Fixiereinrichtung aufweisen, mit der sie auf der Führungsbahn unverschieblich fixierbar sind, und mit einer Antriebseinrichtung zum Verfahren der Schlitten. Ferner bezieht sich die Erfindung auf Bearbeitungsmaschinen mit solchen Werkstückspanntischen sowie auf Verfahren zum Positionieren von Schlitten zum Aufspannen eines Werkstückes.

Werkstückspanntische der eingangs genannten Art sind beispielsweise aus DE 44 44 339 C1 und DE 199 21 048 C1 bekannt.

In der DE 44 44 339 C1 wird vorgeschlagen, über den Schlitten bzw. der Bearbeitungsebene eine Mitnahmevorrichtung mit einem ausfahrbaren Mitnehmer anzuordnen und in jedem Schlitten eine Aufnahmevorrichtung auszubilden, in die der Mitnehmer zum Verschieben des betreffenden Schlittens eingreifen kann. Diese Mitnahmevorrichtung beeinträchtigt die Zugänglichkeit der Bearbeitungsebene, ist konstruktiv aufwendig und benötigt zum Positionieren der Schlitten relativ viel Zeit.

Gemäß DE 199 21 048 C1 sind zum Verfahren erster Schlitten auf Trägern und der Träger mittels zweiter Schlitten auf Führungsschienen jeweils Linearmotoren vorgesehen, wobei die Schlitten jeweils für sich ansteuerbare Läufer aufweisen. Auch diese Lösung ist mit einem erheblichen technischen Aufwand verbunden.

Auch aus der DE 196 31 661 A1 ist es bekannt, jeden Schlitten mit einem eigenen Antriebsaggregat auszustatten. In der DE 196 31 630 A1 wird vorgeschlagen, die Spannelemente lösbar an den Trägern zu befestigen und zum Positionieren der Spannelemente diese vom Träger abzuheben und in der Sollposition wieder aufzusetzen.

Demgegenüber liegt die Aufgabe der vorliegenden Erfindung darin, die Positionierung der Spannelemente bzw. Schlitten mit geringerem Aufwand und trotzdem schnell durchzuführen.

Erfindungsgemäß wird diese Aufgabe bei einem gattungsgemäßen Werkstückspanntisch dadurch gelöst, daß die Schlitten Kupplungseinrichtungen aufweisen, mit denen sie zu einem Schlittenverband aneinander ankuppelbar und von diesem wieder abkuppelbar sind, daß ein Schlitten als Masterschlitten ausgebildet ist, der an die Antriebseinrichtung anschließbar ist, und daß jeder andere Schlitten ein Slaveschlitten ist, der von dem Masterschlitten im Schlittenverband verfahrbar ist.

Die der Erfindung zugrundeliegende Aufgabe wird auch noch durch ein Verfahren zum Positionieren von Schlitten zum Aufspannen eines Werkstückes gelöst, das die Verfahrensschritte a) bis h) von Anspruch 12 aufweist.

Bei einem erfindungsgemäßen Werkstückspanntisch werden die Schlitten bzw. Spannelemente positioniert, indem die Schlitten zu einem Schlittenverband aneinandergehängt werden, jeder Schlittenverband durch Antrieb jeweils eines Schlittens verfahren wird und die einzelnen Schlitten an ihren jeweiligen Sollpositionen wieder abgehängt werden. Dadurch, daß alle Schlitten Kupplungseinrichtungen aufweisen, mit denen Schlittenverbände gebildet und auch wieder aufgelöst werden können, und Masterschlitten und Slaveschlitten ausgebildet sind, können mehrere Schlitten nur durch Antrieb eines Schlittens verfahren werden. Aufgrund der deutlich geringeren Anzahl an benötigten Antrieben verringert sich der konstruktive Aufwand beträchtlich. Dabei ist die Zeit, in der die Schlitten in ihre Sollposition gebracht werden, sehr gering. Denn wegen der Zusammenführung zu Schlittenverbänden werden sämtliche Schlitten gleichzeitig in Richtung auf ihre Sollposition verfahren, so daß die Antriebseinrichtung keine Leerwege zurücklegt.

In bevorzugter Weiterbildung der Erfindung sind auf einer Führungsbahn mehrere Slaveschlitten angeordnet und weisen der Master- sowie die Slaveschlitten in Führungsbahnlängsrichtung jeweils an ihren beiden Enden Kupplungseinrichtungen auf. Der Masterschlitten kann dabei an erster Stelle im Schlittenverband stehen oder je nach Anwendungsfall auch zwischen den Slaveschlitten.

In einer vorteilhaften Ausführungsform der Erfindung sind erste Schlitten als Spannelemente ausgebildet und auf als Träger ausgebildeten Führungsbahnen angeordnet und sind die Träger auf zweiten Schlitten gelagert, die längs quer zur Trägerlängsrichtung verlaufenden Führungsschienen verfahrbar sind, wobei einer der Träger auf wenigstens einer Führungsschiene auf einem zweiten Masterschlitten gelagert ist und einen Masterträger ausbildet und die anderen Träger auf zweiten Slaveschlitten gelagert sind und Slaveträger ausbilden. Durch das Aneinanderkuppeln der zweiten Schlitten wird ein Trägerverband ausgebildet, wobei die Sollposition der zweiten Schlitten gleichbedeutend ist mit der Sollposition des jeweils zugehörigen Trägers. Mit einem solchen System von Trägern und Spannelementen können auch bei großen Werkzeugspanntischen die Spannelemente mit relativ geringem Aufwand schnell in ihre Sollposition gebracht werden. Die Schlittenverstellung erfolgt autark und unabhängig von den Hauptachsen der jeweiligen Bearbeitungsmaschine, die einen solchen erfindungsgemäßen Werkstückspanntisch aufweist.

In weiterer Ausgestaltung der Erfindung kuppeln die Kupplungseinrichtungen durch Formschluß, beispielsweise durch Klettverschluß oder Rastbolzen.

Es ist aber auch möglich, daß die Kupplungseinrichtungen durch Kraftschluß kuppeln. Denkbar ist hier z.B. ein Kraftschluß durch Permanentmagnete.

In günstiger Weiterbildung der Erfindung ist die Antriebseinrichtung für jeden Masterschlitten in seine Führungsbahn integriert. Die Antriebseinrichtung kann beispielsweise ein elektrischer Linearmotor, ein Kugelgewindetrieb mit Servomotor, ein Zahnriementrieb, ein kolbenstangenloser Zylinder mit Positioniersystem oder ein beliebiges CNC-regelbares vorschubelement sein.

Vorzugsweise sind die Fixiereinrichtungen als automatische Klemmeinrichtungen ausgebildet. Einsetzbar hier ist jedes geeignete automatische Klemmsystem. Es kann pneumatisch, federkraftbetätigt oder elektromagnetisch ausgeführt sein.

In einer bevorzugten Ausführungsform der Erfindung ist die durch die Fixiereinrichtungen ausgeübte Fixierkraft größer als die durch die Kupplungseinrichtungen ausgeübte Kupplungskraft. Auf diese Weise können die einzelnen Schlitten während des Verfahrens des Schlittenverbandes durch ihr bloßes Fixieren vom Schlittenverband abgekuppelt werden. Ein gesonderter Abkupplungsvorgang ist dann nicht mehr notwendig.

Vorteilhafterweise weist ein erfindungsgemäßer Werkstückspanntisch ein Magazin zur Aufnahme der Schlitten in einer Ruheposition auf den Führungsbahnen und ganz besonders bevorzugt ein Magazin zur Aufnahme der ersten Schlitten in einer Ruheposition auf dem Träger bzw. den Trägern auf. Solche Magazine können gleichzeitig eine Späneabdeckung mitausbilden.

Die Erfindung umfaßt auch Bearbeitungsmaschinen mit erfindungsgemäßen Werkstückspanntischen.

Vorzugsweise wird bei dem erfindungsgemäßen Verfahren jeder Schlittenverband zum Referenzieren vor dem Positionieren des ersten Schlittens in eine Nullstellung verfahren. Hierdruch kann auf einfache und schnelle Weise für jeden Schlitten ein Referenzwert für seine Positionierung erzeugt werden.

Dabei können vorteilhafterweise die aktuell nichtbenötigten Schlitten in ihrer Nullstellung fixiert werden. Wenn dann die anderen Schlitten verfahren werden, werden die nichtbenötigten Schlitten automatisch vom Schlittenverband abgekuppelt.

Die Erfindung wird nachfolgend anhand der Zeichnungen beispielshalber noch näher erläutert. Es zeigen
- Figur 1 -: in einer Perspektivansicht Schlitten und Führungsbahn eines erfindungsgemäßen Werkstückspanntisches;
- Figur 2 -: in einer schematischen Perspektivansicht auf einer Führungsbahn befindliche Schlitten in der Nullstellung bzw. Ruheposition;
- Figur 3 -: eine der Figur 2 ähnliche Ansicht mit einem aus drei Schlitten bestehenden Schlittenverband;
- Figur 4 -: eine den Figuren 2 und 3 ähnliche Ansicht mit in ihren Sollpositionen fixierten Schlitten;
- Figur 5 -: in einer schematischen Perspektivansicht einen erfindungsgemäßen Werkstückspanntisch mit in Nullstellung bzw. Ruheposition befindlichen ersten und zweiten Schlitten; und
- Figur 6 -: den Werkstückspanntisch aus Figur 5 mit in ihren Sollpositionen befindlichen Schlitten.

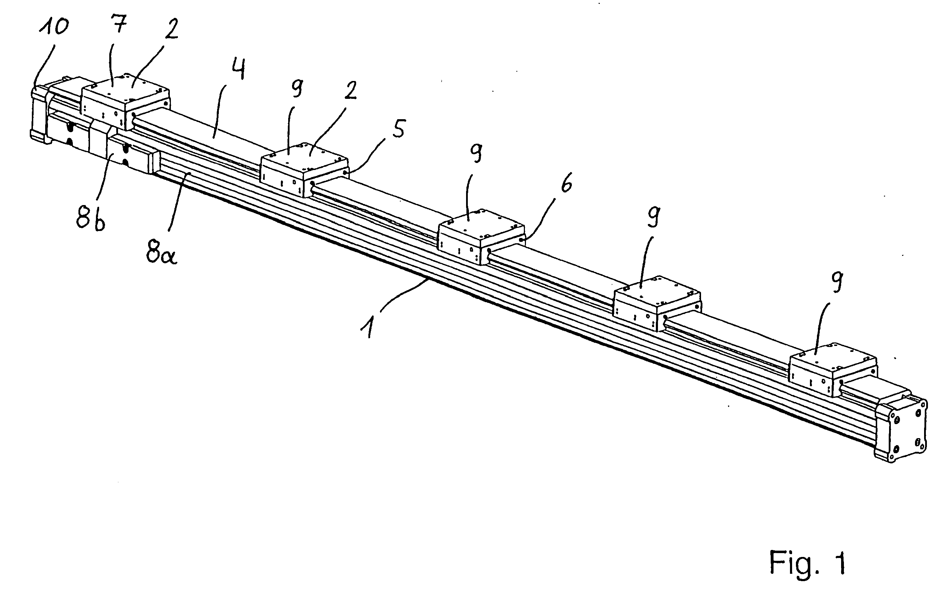

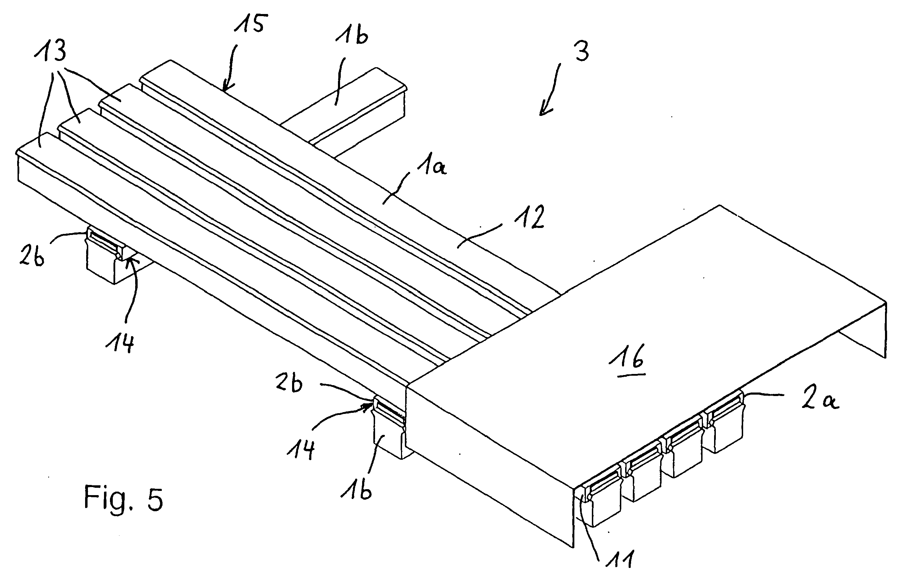

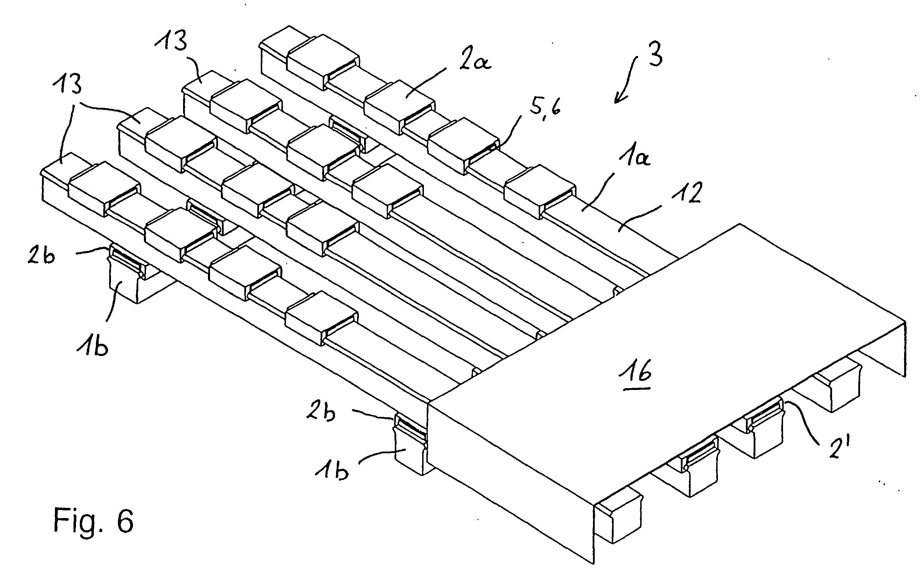

Als Ausführungsbeispiele der Erfindung sind in den Figuren 1 bis 4 einzelne Führungsbahnen 1 mit darauf befindlichen Schlitten 2 und in den Figuren 5 und 6 erste Schlitten 2a, Träger 1a, zweite Schlitten 2b und Führungsschienen 1b eines erfindungsgemäßen Werkstückspanntisches 3 dargestellt.

Die Schlitten 2 sind auf der Oberseite 4 ihrer Führungsbahn 1 in Reihe hintereinander angeordnet und längs dieser verschiebbar. Im in Figur 1 dargestellten Ausführungsbeispiel sind die Schlitten 2 als Spannelemente ausgebildet, hier als Saugspanner, und weisen in Führungsbahnlängsrichtung an ihren beiden Enden jeweils Kupplungseinrichtungen 5 auf, mit denen sie aneinander ankuppelbar sind. Im dargestellten Ausführungsbeispiel erfolgt die Kupplung kraftschlüssig über Permanentmagnete 6. Über eine (nicht dargestellte) Fixiereinrichtung, z.B. ein automatisches Klemmsystem, können die Schlitten 2 in einer beliebigen Position längs der Führungsbahn 1 fixiert werden. Dabei ist die Halte- bzw. Klemmkraft der Fixiereinrichtung größer als die Kupplungskraft der Permanentmagnete 6, so daß bei aneinander gekuppelten, sich in Führungsbahnlängsrichtung bewegenden Schlitten 2 die in Bewegungsrichtung hinteren Schlitten durch einfaches Fixieren von den vorderen Schlitten abgekuppelt werden können.

Einer der Schlitten 2 ist als ein Masterschlitten 7 ausgebildet, d.h. er ist mit einem Antrieb 8a, 8b versehen bzw. an einen Antrieb anschließbar und kann selbständig längs der Führungsbahn 1 verfahren werden. Im in Figur 1 dargestellten Ausführungsbeispiel ist der linke Schlitten 2 der Masterschlitten 7. Die anderen Schlitten 2 sind Slaveschlitten 9, die keinen eigenen Antrieb aufweisen und auch nicht selbst an eine Antriebseinrichtung anschließbar sind. Sie können nur längs der Führungsbahn 1 verfahren werden, indem sie an den Masterschlitten 7 angekuppelt und von diesem gezogen oder geschoben werden.

Wie aus Figur 1 ersichtlich ist, ist im dargestellten Beispiel die Antriebseinrichtung 8a, 8b in die Führungsbahn 1 integriert. So sind an der Führungsbahn 1 Statoren 8a eines Linearmotors angebracht. Die zugehörigen Läufer 8b sind am Masterschlitten 7 befestigt.

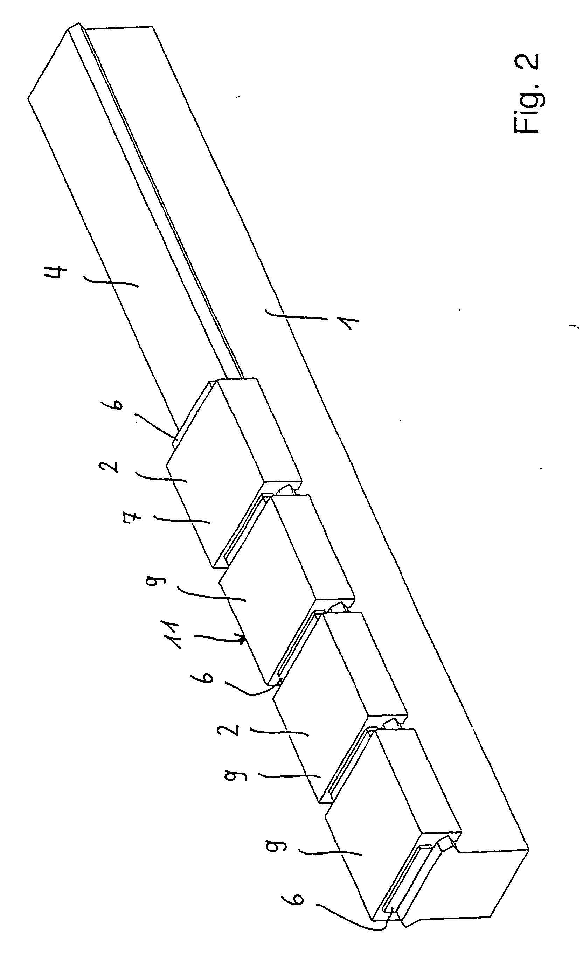

Figur 2 zeigt vier auf einer Führungsbahn 1 in Reihe hintereinander angeordnete Schlitten 2 in ihrer Ruheposition, die auch gleichzeitig ihre Nullstellung ist. Die Führungsbahn 1 kann an ihren beiden Enden einen quer zur Führungsbahn 1 vorragenden Anschlag 10 aufweisen, wie er in Figur 1 dargestellt ist. Gegen einen solchen Anschlag 10 fährt der Masterschlitten 7 alle Slaveschlitten 9 zum Referenzieren auf Block. Von dieser Nullstellung aus werden alle Verfahrwege des Masterschlittens 7 aus gemessen. Durch das Fahren in diese Endstellung bzw. Nullstellung werden zudem alle Schlitten 2 miteinander zu einem Schlittenverband 11 zusammengekuppelt. Die Klemmsysteme der Schlitten 2 sind dabei alle geöffnet.

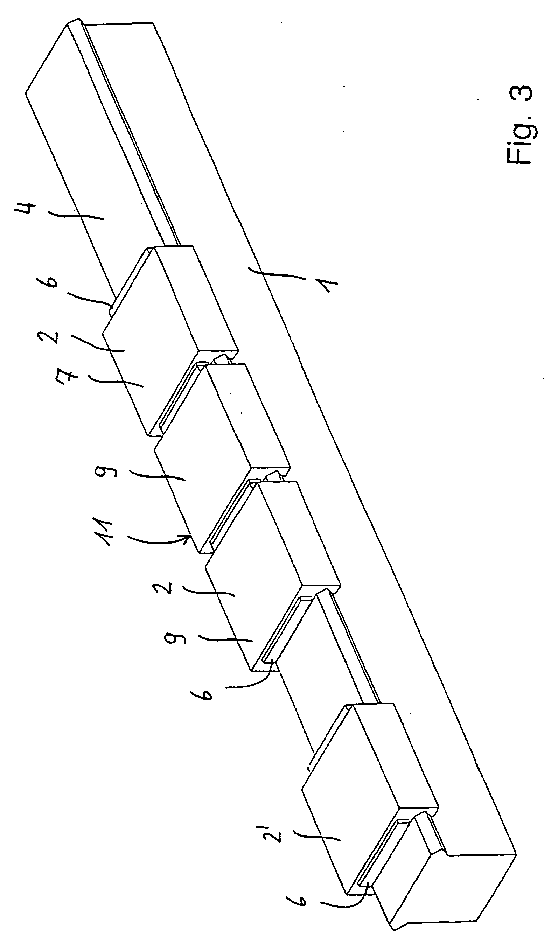

In Figur 3 ist das Verfahren eines Schlittenverbandes 11 längs der Führungsbahn 1 dargestellt. Werden für einen Bearbeitungs- bzw. Spannvorgang nicht alle auf einer Führungsbahn 1 befindliche Schlitten 2 benötigt, werden die in Verfahrrichtung hinteren nicht benötigten Schlitten 2' in der Nullstellung geklemmt, so daß sie vom Schlittenverband 11 abgekupelt werden, wenn der Masterschlitten 7 angetrieben wird. Im dargestellten Ausführungsbeispiel verbleibt der letzte Schlitten 2' in der Nullstellung, während ein Schlittenverband 11 aus drei Schlitten, d.h. dem Masterschlitten 7 und zwei Slaveschlitten 9, längs der Führungsbahn 1 verfahren wird. Der Schlittenverband 11 wird nun in die Sollposition des am Ende des Schlittenverbandes 11 befindlichen Schlittens 9 gefahren. In der Sollposition wird dieser, nunmehr letzte Slaveschlitten 9 fixiert bzw. geklemmt. Durch Weiterverfahren des restlichen Schlittenverbandes 11, der nunmehr noch aus dem Masterschlitten 7 und einem weiteren Slaveschlitten 9 besteht, wird der geklemmte Schlitten abgekuppelt.

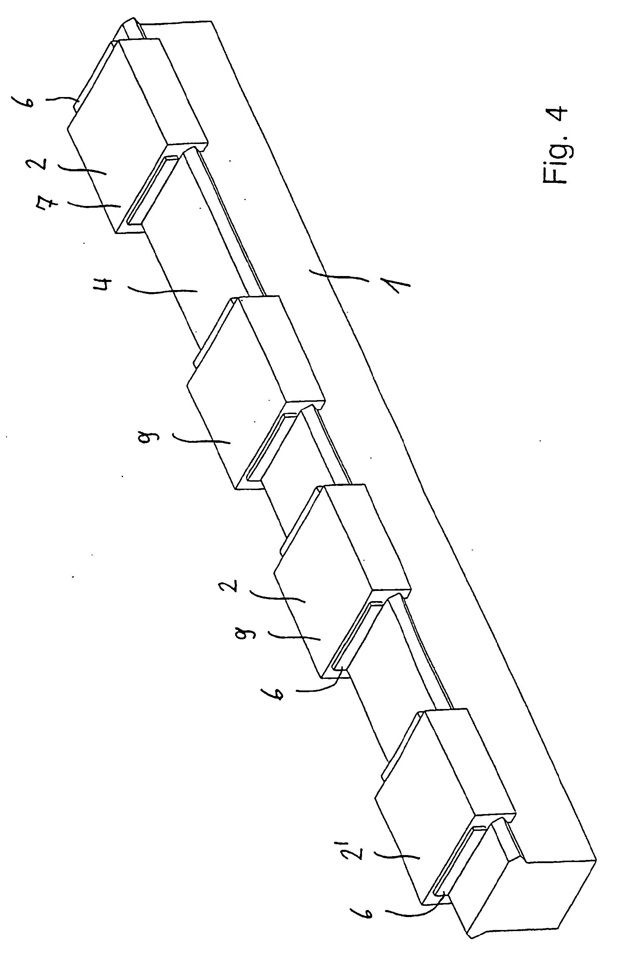

Der Schlittenverband 11 fährt jetzt in die Sollposition des letzten noch im Schlittenverband 11 vorhandenen Slaveschlittens 9, wo dieser geklemmt und dadurch auch vom Masterschlitten 7 abgekuppelt wird. Der Masterschlitten 7 fährt nun in seine eigene Sollposition und wird dort geklemmt. Die auf der Führungsbahn 1 vereinzelten Schlitten 2, 7, 9, i.e. die Schlitten 2,7,9 in ihrer jeweiligen Sollposition auf der Führungsbahn 1, sind in Figur 4 dargestellt.

Die Figuren 5 und 6 zeigen einen Werkstückspanntisch 3 mit vier solcher Führungsbahnen 1, wie sie in Figuren 1 bis 4 dargestellt sind, als Träger 1a ausgebildet. Auf den Trägern 1a sind in Reihe erste Schlitten 2a angeordnet, die als Spannelemente ausgebildet sind oder zu deren Halterung dienen. Die Träger 1a liegen parallel nebeneinander. Sie sind jeweils auf zwei zweiten Schlitten 2b gelagert, die ihrerseits auf zwei, sich quer zur Trägerlängsrichtung erstreckenden Führungsschienen 1b laufen. Jeweils zwei zweite Schlitten 2b tragen somit in Gantry-Anordnung einen Träger la. Im dargestellten Ausführungsbeispiel sind die Führungsschienen 1b genauso wie die Träger 1a selbst ausgebildet.

Einer der Träger 1a ist auf zwei Masterschlitten 7 gelagert und bildet somit einen Masterträger 12 aus, der selbständig längs der Führungsschienen 1b verfahrbar ist. Die anderen Träger 1a sind jeweils auf zwei Slaveschlitten 9 gelagert und bilden somit Slaveträger 13 aus.

In ähnlicher Weise wie die ersten Schlitten 2a zu einem Schlittenverband 11 zusammengekuppelt und verfahren und auch wieder abgekuppelt werden, werden auch die zweiten Schlitten 2b mit den Trägern 1a zu einem "zweiten Schlittenverband" 14 auf jeder Führungsschiene 1b aneinander gekuppelt und verfahren und wieder voneinander abgekuppelt, wobei hier aufgrund der auf den zweiten Schlitten 2b befestigten Träger 1a auch ein Trägerverband 15 gebildet, verfahren und wieder vereinzelt wird. Statt von zweiten Schlittenverbänden 14 kann daher auch von einem Trägerverband 15 gesprochen werden.

Figur 5 zeigt die vier Träger 1a in ihrer Nullstellung bzw. Ruheposition auf den Führungsschienen 1b und die ersten Schlitten 2a auf den Trägern 1a in ihrer Ruheposition bzw. Nullstellung. Für die ersten Schlitten 2a ist ein Schlittenmagazin 16 bzw. eine Späneabdeckung vorgesehen, unter der sich die ersten Schlitten 2a in ihrer Ruheposition befinden.

Figur 6 zeigt sowohl die Träger 1a als auch die ersten Schlitten 2a in vereinzeltem Zustand, d.h. sie wurden als Schlitten- bzw. Trägerverband 11,15 in ihre jeweiligen Sollpositionen verfahren und dort fixiert.

## Patentansprüche

1. Merkstückspanntisch mit wenigstens zwei Schlitten (2), die als Spannelemente ausgebildet sind oder zu deren Halterung dienen und die in Reihe auf einer Führungsbahn (1) angeordnet sowie längs dieser verfahrbar sind und jeweils eine Fixiereinrichtung aufweisen, mit der sie auf der Führungsbahn (1) unverschieblich fixierbar sind, und mit einer Antriebseinrichtung (8a,8b) zum Verfahren der Schlitten (2),
**dadurch gekennzeichnet,**
**daß** die Schlitten (2) Kupplungseinrichtungen (5) aufweisen, mit denen sie zu einem Schlittenverband (11) aneinander ankuppelbar und von diesem wieder abkuppelbar sind,
**daß** ein Schlitten (2) als Masterschlitten (7) ausgebildet ist, der an die Antriebseinrichtung (8a, 8b) anschließbar ist, und
**daß** jeder andere Schlitten (2) ein Slaveschlitten (9) ist, der von dem Masterschlitten (7) im Schlittenverband (11) verfahrbar ist, und
**daß** die durch die Fixiereinrichtungen ausgeübte Fixierkraft größer ist als die durch die Kupplungseinrichtungen (5) ausgeübte Kupplungskraft.

2. Werkstückspanntisch nach Anspruch 1,
**dadurch gekennzeichnet,**
**daß** auf einer Führungsbahn (1) mehrere Slaveschlitten (9) angeordnet sind und der Master- sowie die Slaveschlitten (7, 9) in Führungsbahnlängsrichtung jeweils an ihren beiden Enden Kupplungseinrichtungen (5) aufweisen.

3. Werkstückspanntisch nach Anspruch 1 oder 2,
**dadurch gekennzeichnet,**
**daß** erste Schlitten (2a) als Spannelemente ausgebildet und auf als Träger (1a) ausgebildeten Führungsbahnen (9) angeordnet sind und
**daß** die Träger (1a) auf zweiten Schlitten (2b) gelagert sind, die längs quer zur Trägerlängsrichtung verlaufenden Führungsschienen (1b) verfahrbar sind, wobei einer der Träger (1a) auf wenigstens einer Führungsschiene (1b) auf einem zweiten Masterschlitten (7) gelagert ist und einen Masterträger (12) ausbildet und die anderen Träger (1a) auf zweiten Slaveschlitten (9) gelagert sind und Slaveträger (13) ausbilden.

4. Werkstückspanntisch nach einem der Ansprüche 1 bis 3,
**dadurch gekennzeichnet,**
**daß** die Kupplungseinrichtungen (5) durch Formschluß kuppeln.

5. Werkstückspanntisch nach einem der Ansprüche 1 bis 3,
**dadurch gekennzeichnet,**
**daß** die Kupplungseinrichtungen (5) durch Kraftschluß kuppeln.

6. Werkstückspanntisch nach einem der Ansprüche 1 bis 5,
**dadurch gekennzeichnet,**
**daß** die Antriebseinrichtung (8a, 8b) für jeden Masterschlitten (7) in seiner Führungsbahn (1) integriert ist.

7. Werkstückspanntisch nach einem der Ansprüche 1 bis 6,
**dadurch gekennzeichnet,**
**daß** die Fixiereinrichtungen als automatische Klemmeinrichtungen ausgebildet sind.

8. Werkstückspanntisch nach einem der Ansprüche 1 bis 7,
**dadurch gekennzeichnet,**
**daß** er ein Magazin (16) zur Aufnahme der Schlitten (2) in einer Ruheposition auf den Führungsbahnen (1) aufweist.

9. Werkstückspanntisch nach Anspruch 8 in Verbindung mit Anspruch 3,
**dadurch gekennzeichnet,**
**daß** er ein Magazin (16) zur Aufnahme der ersten Schlitten (2a) in einer Ruheposition auf dem Träger bzw. den Trägern (1a) aufweist.

10. Bearbeitungsmaschine mit einem Werkstückspanntisch nach einem der Ansprüche 1 bis 9.

11. verfahren zum Positionieren von Schlitten zum Aufspannen eines Werkstückes, mit folgenden Schritten:
a) Bereitstellen eines Werkstückspanntisches (3) nach einem der Ansprüche 1 bis 10;
b) Anschließen jedes Masterschlittens (7) an die zugehörige Antriebseinrichtung (8a, 8b);
c) falls die Schlitten (2) nicht bereits zu Schlittenverbänden (11) aneinander angekuppelt sind, Verfahren jedes Masterschlittens (7) zu den Slaveschlitten (9) auf seiner Führungsbahn (1) zum Aneinanderkuppeln der Schlitten (2) zu einem Schlittenverband (11);
d) Verfahren jedes Schlittenverbandes (11) soweit, bis ein an einem Ende des Schlittenverbandes (11) befindlicher Slaveschlitten (9) seine Sollposition auf der Führungsbahn (1) erreicht hat;
e) Fixieren dieses Slaveschlittens (9) in dessen Sollposition auf der Führungsbahn (1) mit einer Fixierkraftung, die größer ist als die den Slaveschlitten (9) ankuppelnde Kupplungskraft;
f) Abkuppeln dieses Slaveschlittens (9) vom Schlittenverband (11);
g) Wiederholen der Schritte d) bis f) bis der letzte Slaveschlitten (9) in seiner Sollposition positioniert ist; und
h) Verfahren jedes Masterschlittens (7) zu und Fixieren jedes Masterschlittens (7) in dessen Sollposition.

12. Verfahren nach Anspruch 11,
**dadurch gekennzeichnet,**
**daß** jeder Schlittenverband (11) zum Referenzieren vor dem Positionieren des ersten Schlittens (2) in eine Nullstellung verfahren wird.

13. Verfahren nach Anspruch 12,
**dadurch gekennzeichnet,**
**daß** die nichtbenötigten Schlitten (2') in ihrer Nullstellung fixiert werden.

## Claims

1. Clamping table for workpieces, having at least two slides (2) which are configured as clamping elements or serve to hold the latter, are arranged in a row on a guide track (1) and can be displaced along the latter and have in each case a fixing device, with which they can be fixed non-displaceably on the guide track (1), and having a drive device (8a, 8b) for moving the slides (2), **characterized in that** the slides (2) have coupling devices (5), by way of which they can be coupled to one another to form a slide system (11) and can be decoupled from the latter again, **in that** one slide (2) is configured as a master slide (7) which can be connected to the drive device (8a, 8b), and **in that** each other slide (2) is a slave slide (9) which can be moved by the master slide (7) in the slide system (11), and **in that** the fixing force which is exerted by the fixing devices is greater than the coupling force which is exerted by the coupling devices (5).

2. Clamping table for workpieces according to Claim 1, **characterized in that** a plurality of slave slides (9) are arranged on a guide track (1), and the master slide (7) and the slave slides (9) have coupling devices (5) in each case at their two ends in the longitudinal direction of the guide track.

3. Clamping table for workpieces according to Claim 1 or 2, **characterized in that** first slides (2a) are configured as clamping elements and are arranged on guide tracks (1) which are configured as carriers (1a), and **in that** the carriers (1a) are mounted on second slides (2b) which can be moved along guide rails (1b) which extend transversely with respect to the longitudinal direction of the carriers, one of the carriers (1a) being mounted on at least one guide rail (1b) on a second master slide (7) and forming a master carrier (12), and the other carriers (1a) being mounted on second slave slides (9) and forming slave carriers (13).

4. Clamping table for workpieces according to one of Claims 1 to 3, **characterized in that** the coupling devices (5) couple by a form-fitting connection.

5. Clamping table for workpieces according to one of Claims 1 to 3, **characterized in that** the coupling devices (5) couple by a force-transmitting connection.

6. Clamping table for workpieces according to one of Claims 1 to 5, **characterized in that** the drive device (8a, 8b) for each master slide (7) is integrated into its guide track (1).

7. Clamping table for workpieces according to one of Claims 1 to 6, **characterized in that** the fixing devices are configured as automatic clamping devices.

8. Clamping table for workpieces according to one of Claims 1 to 7, **characterized in that** it has a magazine (16) for holding the slides (2) in a rest position on the guide tracks (1).

9. Clamping table for workpieces according to Claim 8 in conjunction with Claim 3, **characterized in that** it has a magazine (16) for holding the first slides (2a) in a rest position on the carrier or the carriers (1a).

10. Machine tool having a clamping table for workpieces according to one of Claims 1 to 9.

11. Method for positioning slides for clamping a workpiece, having the following steps:
a) provision of a clamping table (3) for workpieces according to one of Claims 1 to 10;
b) connection of each master slide (7) to the associated drive device (8a, 8b);
c) if the slides (2) have not already been coupled to one another to form slide systems (11), moving of each master slide (7) to the slave slides (9) on its guide track (1) in order to couple the slides (2) to one another to form a slide system (11);
d) moving of each slide system (11) until a slave slide (9) which is situated at one end of the slide system (11) has reached its intended position on the guide track (1);
e) fixing of this slave slide (9) in its intended position on the guide track (1) with a fixing force which is greater than the coupling force which couples the slave slide (9);
f) uncoupling of this slave slide (9) from the slide system (11);
g) repetition of steps d) to f) until the last slave slide (9) is positioned in its intended position; and
h) moving of each master slide (7) to its intended position and fixing of each master slide (7) in its intended position.

12. Method according to Claim 11, **characterized in that** each slide system (11) is moved into a zero position for referencing before positioning of the first slide (2).

13. Method according to Claim 12, **characterized in that** the slides (2') which are not required are fixed in their zero position.

## Revendications

1. Table de serrage de pièce comprenant au moins deux chariots (2), conçus comme des éléments de serrage ou servant à la fixation de ces derniers, ces deux chariots étant disposés en rang sur une glissière (1), pouvant être déplacés le long de celle-ci et présentant chacun un dispositif de fixation, à l'aide duquel ils peuvent être fixés sur la glissière (1) de manière immobile, et avec un dispositif d'entraînement (8a, 8b) destiné à déplacer les chariots (2),
**caractérisée en ce que**
les chariots (2) présentent des dispositifs d'accouplement (5) à l'aide desquels ils peuvent être accouplés les uns aux autres de manière à former un assemblage de chariots (11) et décrochés les uns des autres,
**en ce qu'**un chariot (2) est conçu comme un chariot maître (7) qui peut être raccordé au dispositif d'entraînement (8a, 8b), et
**en ce que** tout autre chariot (2) est un chariot esclave (9), qui peut être déplacé par le chariot maître (7) dans l'assemblage de chariots (11), et
**en ce que** la force de fixation exercée par les dispositifs de fixation est supérieure à la force d'accouplement exercée par les dispositifs d'accouplement (5).

2. Table de serrage de pièce selon la revendication 1,
**caractérisée en ce que** plusieurs chariots esclaves (9) sont disposés sur une glissière (1) et **en ce que** le chariot maître ainsi que les chariots esclaves (7, 9) présentent chacun des dispositifs d'accouplement (5) au niveau de leurs deux extrémités dans le sens longitudinal de la glissière.

3. Table de serrage de pièce selon la revendication 1 ou 2,
**caractérisée en ce que** les premiers chariots (2a) sont conçus comme des éléments de serrage et sont disposés sur des glissières (9) conçues comme support (1a), et **en ce que** les supports (1a) sont logés sur les seconds chariots (2b) qui peuvent être déplacés le long de la glissière (1b) s'étendant transversalement par rapport au sens longitudinal du support, l'un des supports (1a) étant logé sur au moins une glissière (1b) sur un second chariot maître (7) et formant un support maître (12) et les autres supports (1a) étant logés sur les seconds chariots esclaves (9) et formant le support esclave (13).

4. Table de serrage de pièce selon l'une quelconque des revendications 1 à 3,
**caractérisée en ce que** les dispositifs d'accouplement (5) assurent un couplage par correspondance de forme.

5. Table de serrage de pièce selon l'une quelconque des revendications 1 à 3,
**caractérisée en ce que** les dispositifs d'accouplement (5) assurent un couplage par adhérence.

6. Table de serrage de pièce selon l'une quelconque des revendications 1 à 5,
**caractérisée en ce que** le dispositif d'entraînement (8a, 8b) est intégré pour chaque chariot maître (7) dans sa glissière (1).

7. Table de serrage de pièce selon l'une quelconque des revendications 1 à 6,
**caractérisée en ce que** les dispositifs de fixation sont conçus comme des dispositifs de serrage automatiques.

8. Table de serrage de pièce selon l'une quelconque des revendications 1 à 7, **caractérisée en ce qu'**elle présente un magasin (16) destiné à recevoir les chariots (2) dans une position de repos sur les glissières (1).

9. Table de serrage de pièce selon la revendication 8 conjointement avec la revendication 3, **caractérisée en ce qu'**elle présente un magasin (16) destiné à recevoir les premiers chariots (2a) dans une position de repos sur le support et/ou les supports (1a).

10. Machine d'usinage comprenant une table de serrage de pièce selon l'une quelconque des revendications 1 à 9.

11. Procédé de positionnement de chariots pour serrer une pièce, comportant les étapes suivantes :
a) la mise à disposition d'une table de serrage de pièce (3) selon l'une quelconque des revendications 1 à 10 ;
b) le raccordement de chaque chariot maître (7) au dispositif d'entraînement (8a, 8b) afférent ;
c) si les chariots (2) ne sont pas déjà accouplés l'un à l'autre de manière à former des assemblages de chariots (11), le déplacement de chaque chariot maître (7) vers les chariots esclaves (9) sur sa glissière (1) pour coupler les chariots (2) de manière à former un assemblage de chariots (11) ;
d) le déplacement de chaque assemblage de chariots (11) jusqu'à ce qu'un chariot esclave (9) se trouvant à une extrémité de l'assemblage de chariots (11) ait atteint sa position prescrite sur la glissière (1) ;
e) la fixation de ce chariot esclave (9) dans sa position prescrite sur la glissière (1) à l'aide d'une force de fixation qui est supérieure à la force d'accouplement couplant le chariot esclave (9) ;
f) le décrochage de ce chariot esclave (9) de l'assemblage de chariots (11) ;
g) la répétition des étapes d) à f) jusqu'à ce que le dernier chariot esclave (9) soit positionné dans sa position prescrite ; et
h) le déplacement de chaque chariot maître (7) vers et fixation de chaque chariot maître (7) dans sa position prescrite.

12. Procédé selon la revendication 11,
**caractérisé en ce que** chaque assemblage de chariots (11) est déplacé à des fins de référence avant le positionnement du premier chariot (2) dans une position d'origine.

13. Procédé selon la revendication 12,
**caractérisé en ce que** les chariots (2') non nécessaires sont fixés dans leur position d'origine.
